# EUROPEAN PATENT APPLICATION

(11) **EP 2 570 381 A1**
(43) Date of publication of application: **20.03.2013**
(21) Application number: 11780193.6
(22) Date of filing: 10.05.2011
(51) Int. Cl.: B66F 9/06, B66F 9/22, F15B 21/14, F15B 11/00

(54) **TRAVELING HYDRAULIC HANDLING MACHINE OF ENERGY-SAVING TYPE**

(30) Priority: 26.09.2010 CN 201010297795; 08.07.2010 CN 201010228190; 13.05.2010 CN 201010174436
(71) Applicant: Jinan Jenhang Energy-saving Technology Co., Ltd., Jinan, Shandong 250101 (CN)
(72) Inventor: JIANG, Shaocheng, Shanghai 200442 (CN); BAI, Ruihai, Beijing 100045 (CN); YAO, Hang, Shandong 250014 (CN); ZHANG, Guizhen, Shandong 250014 (CN)
(74) Representative: advotec.
(86) International application number: PCT/CN2011/073890
(87) International publication number: WO 2011/140972

(57) **Abstract**

A traveling hydraulic handling machine of energy-saving type includes a driving system and a control system for both hoisting and traveling. The hydraulic handling machine converts partly potential energy of a heavy object before being lowered and kinetic energy of a vehicle before being braked to pressure energy of a fluid and stores the pressure energy into a hydraulic energy accumulator (15) by using added hydraulic elements with the aid of the original hydraulic system of the handling machine during lifting and lowering of the heavy object as well as braking and starting of the vehicle, thus enabling potential energy of the heavy object and kinetic energy of the vehicle obtained by consuming power to be partly regenerated during next lifting of the heavy object and starting of the vehicle, to reduce the load and power of a power machine for driving an oil pump and starting the vehicle. The device has the advantages of high efficiency of energy recovering and regenerating, remarkable benefits of energy saving and emission reduction, simple and convenient operation, low cost and long service life. The hydraulic elements can be configured during manufacturing of a new machine or be added during rebuilding of an old one.

## Description

This application claims the benefit of priorities of the following three Chinese Patent Applications, entire disclosures of which are incorporated herein by reference.

1. Chinese Patent Application No. 201010297795.9 titled "ENERGY-SAVING TRAVELING HYDRAULIC HANDLING MACHINE", filed with Chinese State Intellectual Property Office on September 26, 2010.

2. Chinese Patent Application No. 201010228190.4 titled "ENERGY-SAVING TRAVELING HYDRAULIC HANDLING MACHINE", filed with Chinese State Intellectual Property Office on July 8, 2010.

3. Chinese Patent Application No. 201010174436.4 titled "POTENTIAL ENERGY RECOVERING AND REGENERATION SYSTEM FOR HYDRAULIC LIFTING MACHINE", filed with Chinese State Intellectual Property Office on May 13, 2010.

### FIELD OF THE INVENTION

The present application relates to a technical field of hydraulic machine design, and particularly to an energy-saving traveling hydraulic handling machine.

### BACKGROUND OF THE INVENTION

Herein, the traveling hydraulic handling machines refer to vehicles using oil cylinders to lift and lower heavy objects. The traveling hydraulic handling machines are widely used in the transportation and loading and unloading operations in harbor docks, goods yards of road and railway, engineering machineries, factories and storages, such as a forklift, a reach stacker for containers, a stacking machine for empty containers, a hydraulic excavator, a crane with a partial track and a vehicle crane. In the traveling hydraulic handling machines, a power machine (a diesel engine or an electric motor) drives an oil pump to push an oil cylinder so as to lift a heavy object, and drives the vehicle by a mechanical transmission, such that the energy from the power machine are converted to energy of the heavy object and the vehicle (potential energy and kinetic energy). At present, in the above machines, when lowering the heavy objects, the returning oil of the oil cylinder passes through a narrow opening of the control valve so as to control the lowering speed of the heavy objects. Heat energy, generated by the hydraulic throttle converted from the potential energy of the heavy objects, is emitted to the atmosphere. Heat energy, converted from kinetic energy of the vehicle during the mechanical friction brake, is also emitted to the atmosphere. Thus, a lot of energy is wasted. If the potential energy of the heavy object during the lowering process and kinetic energy before the braking can be recovered and regenerated for a next lifting and starting process, the traveling hydraulic handling machine may be transformed to an energy-saving type machine, which is a contribution to the emission reduction. The energy-saving traveling hydraulic handling machine has been required by users and leads a research direction for the manufacturers. This tendency is also reflected by some recent information and reports, such as a Chinese Patent Application No. 200810143874.7 titled " METHOD AND DEVICE FOR RECOVERING POTENTIAL ENERGY OF SWING ARM OF HYDRAULIC EXCAVATOR". A common feature of these technical solutions is that, potential energy of the heavy object during the lowering process is converted to electric energy to be stored in a battery or a super capacity. The above technical solutions have the following problems, the duration of lowering process is too short for an ordinary battery to be charged, thus the recovered potential energy is limited; and the super capacity and the lithium battery of high capacity have many bottleneck problems in economy, technology and service life, thus there is still a long way from them being widely used. In a Chinese Patent Application No. 200710120715.0 titled "ELECTRO-HYDRAULIC ENERGY-SAVING BEAM PUMPER FOR ENERGY RECYCLE UNDER POWER GENERATION STATE", when lowering the beam, a small part of potential energy of the electric motor in a electricity generating working condition is directly stored into a hydraulic energy accumulator via a oil cylinder being lowered. And the stored potential energy may be released into the oil cylinder to assist a lifting process. The above solution can only be used in machines with substantially constant potential energy, and cannot adapt to a common hydraulic handling machine with a continuously changing potential energy.

The existing traveling hydraulic handling machine is a device performing repeated actions, such as lifting or lowering, moving forward or backward, braking or starting. The transmission manner of the lifting operation is described as follows. An oil pump 9 is driven by a power machine 8 (a diesel engine or an electric motor), and the pressure oil outputted by the oil pump 9 flows into a lower cavity of a lifting cylinder 19 via a control valve group (KF) 20 so as to lift a heavy object, thus the power is converted to potential energy of the heavy object. When lowering the heavy object, the oil pump 9 is in an unloading state, and under the action of the gravity of the heavy object, the hydraulic oil in the lower cavity of the lifting cylinder 19 is pressed into the oil tank via the control valve group 20. In order to lower the heavy object in a certain speed steadily, the returning oil of the oil cylinder passes through a narrow opening of the control valve group 20 or a balancing valve (is substantially a self-adjusted throttle valve) is provided so as to control the lowering speed of the heavy object. The transmission manner of the moving forward or backward operation of the vehicle is described as follows. The power machine 8 (a diesel engine or an electric motor) drives wheels 7 via a reduction gearbox 5, having a clutch, and a rear axle 6 so as to drive the car, and the kinetic energy is consumed by mechanical friction during the braking process.

### SUMMARY OF THE INVENTION

The present application provides an energy-saving traveling hydraulic handling machine, in which several hydraulic components are added in an existing hydraulic system to form a new hydraulic system without changing the existing hydraulic system, and the new hydraulic system have at least one hydraulic pump/motor and at least one energy accumulator. On the basis of maintaining all original functions and operating manner of the machine, the new hydraulic system may further achieve a partial recovery and regeneration of potential energy of the heavy object before being lowered and kinetic energy of a vehicle before being braked during lowering or lifting process of the heavy object or braking or starting process of the vehicle.

The technical solutions of the present application are described as follows.

The energy-saving traveling hydraulic handling machine includes a driving system and a control system for hoisting and traveling. A new hydraulic system is formed by adding several hydraulic components in an existing hydraulic system, and includes at least one oil pump/oil motor and at least one energy accumulator. A reversing valve, for controlling a discharging oil to flow to the energy accumulator or a working cylinder, is provided on each oil outlet passage of the at least one oil pump/oil motor. A reversing valve, for controlling a returning oil from the working cylinder to flow to an inlet of the oil pump/oil motor or flow to an oil tank, is provided on each oil inlet passage of the at least one oil pump/oil motor. The new hydraulic system may realize a part of or all of functions of recovering and regenerating potential energy of the heavy object and recovering and regenerating kinetic energy of the vehicle. The oil pump/oil motor in the hydraulic system may be a combination of a variable displacement oil pump/oil motor and a constant displacement oil pump/oil motor, a combination of a constant displacement oil pump/oil motor, or a combination of a variable displacement oil pump/oil motor. The working condition of the oil pump/oil motor of the hydraulic system may be an oil pump working condition, an oil motor working condition, or an unloading working condition.

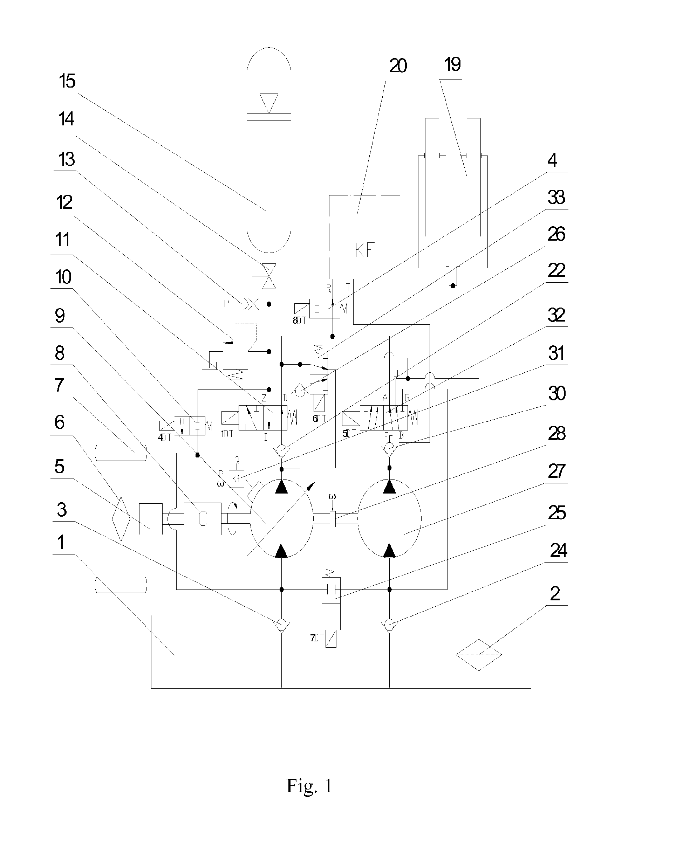

Recovery and regeneration of potential energy of the heavy object is described as follows. During the potential energy recovering process when lowering the heavy object, a part of the oil pump/oil motor enters the oil motor working condition and is driven by the returning pressure oil of the working cylinder to output a torque. Another part of the oil pump/oil motor enters into the oil pump working condition and is driven by the torque outputted by the former to press the oil from the oil tank into the energy accumulator. Double oil pumps/oil motors (as shown in Figure 1) are taken as an example, one oil motor 27 is added in parallel in the existing hydraulic system having only one oil pump 9, and is coaxially or mechanically linked with the oil pump 9 of the existing hydraulic system. When the heavy object is lowered, the returning oil of a lifting cylinder 19 is pressed to an inlet of the oil motor 27 under the gravity of the heavy object, then the oil motor 27 is driven to drive the oil pump 9 to work so as to press the oil into an energy accumulator 15, thereby achieving a partial recovery of potential energy of the heavy object. When the heavy object is lifted, the pressure oil within the energy accumulator 15 flows to oil inlets of the oil pump 9 and the oil motor 27 (in the oil pump working condition) in turn so as to implement a pressure oil supply, which reduces the practical output power of a power machine during a lifting process and realizes a partial regeneration of potential energy of the heavy object.

Detailed description is as follows. One oil motor 27 is provided in parallel in the existing hydraulic system, and is coaxially mounted or mechanically linked with the oil pump 9 (generally, two or more oil pumps connected in parallel and working simultaneously are provided in some large hydraulic lifting machines, such as a stacking machine for empty containers or a reach stacker, and because a general oil motor can be used as an oil pump, all of or some of the oil pumps may be changed to the type of the oil motor 27, thus there is no need to add an oil motor). The connecting way of the oil passages in this system is described as follow. An oil tank 1 is connected to an inlet of the oil pump 9 via a one-way valve 3, and an outlet of the oil pump 9 is connected to a port H of a two-position four-way solenoid reversing valve 11 via a one-way valve 22. The two-position four-way solenoid reversing valve 11 has a port I connected to the oil inlet of the oil pump 9, a port Z connected to the energy accumulator 15 via a stop valve 14, and a port D connected to a pressure oil inlet P_{A} of a control valve group 20. A small two-position two-way solenoid reversing valve 10 having a throttle hole is connected in parallel between the port Z and the port I of the two-position four-way solenoid reversing valve 11. A safety valve 12 and a pressure detecting point 3 are provided on a bypass of the energy accumulator 15. An inlet of the oil motor 27, which is coaxially mounted or mechanically linked with the oil pump 9 of the existing hydraulic system, is connected to the oil tank 1 via a one-way valve 24, and a two-position two-way solenoid reversing valve 25 is provided on a passage between the inlets of the oil motor 27 and the oil pump 9. The outlet of the oil motor 27 is connected to a port F of a two-position five-way solenoid reversing valve 32 via a one-way valve 30. The two-position five-way solenoid reversing valve 32 has a port G connected to the inlet of the oil motor 27, a port A connected to the pressure oil inlet P_{A} of the control valve group 20, a port B connected to a retuning oil port T of the control valve group 20, and a port O connected to a returning oil filter 2. The oil passage connecting the control valve group 20 with a lifting cylinder 19 in the existing hydraulic system is remained, however the flow resistance on the returning oil passage of the control valve group 20 should be reduced.

The above system is applicable to both constant displacement pump and variable displacement pump. The method for controlling the lowering speed of the heavy object is described hereinafter.

(A) In a system which employs a constant displacement oil pump/oil motor, during energy accumulating process when the heavy object is lowered, the returning oil flows to the inlet of the oil motor 27 via a two-position three-way solenoid reversing valve 23. With the rising of the pressure within the energy accumulator 15, the lowering speed is decelerated, and when the pressure within the energy accumulator 15 is equal to the pressure in a lower cavity of the lifting cylinder 19, the heavy object stops falling. Thus when the lowering speed of the heavy object is lower than a required value, a power machine 8 in an idling condition may continue to drive the oil pump 9 and the oil motor 27 to rotate, and the rotating oil motor 27 may continue to lower the heavy object to a required height at a required speed and charge energy to the energy accumulator 15 at the same time. When the energy accumulator is filled, the two-position three-way solenoid reversing valve 23 is reversed, and the returning oil passes through a throttle valve 34, which may control the lowering speed, and flows back to the oil tank 1 via the returning oil filter 2, at the same time a two-position three-way solenoid reversing valve 33 is energized and reversed, and the oil pump 9 and the oil motor 27 are both in the unloading state.

(B) In a system which employs a variable displacement oil pump/oil motor, a constant displacement oil pump for charging energy into the energy accumulator may be replaced with a variable displacement oil pump 9, and one constant displacement oil motor 27 coaxially or mechanically linked with the oil pump 9 is remained; or when the existing system in a lifting machine only has one constant displacement oil pump, the constant displacement oil pump may be replaced with a variable displacement oil pump 9, and one constant displacement oil motor 27 is added to be coaxially or mechanically linked with the oil pump 9. After processing collected data, such as a pressure P and a flow Q of the energy accumulator and a rotate speed ω of the pump, a specialized controller 31(K₁) timely adjusts a displacement of the variable displacement oil pump, so as to control the speed and the smoothness of lowering the heavy object during the unloading process or the lowering process of the power machine after the lifting operation is finished. An instant lowering speed of the heavy object is dependent on the flow Q of the constant displacement oil motor 27 (Q∝_{ω}×q₁), wherein ω is an angular velocity of the constant displacement oil motor 27, and q₁ is a displacement of the constant displacement motor 27 (which is a constant quantity), thus the lowering speed of the heavy object can be controlled by just controlling the rotate speed of the constant displacement oil motor 27. The rotate speeds of the constant displacement oil motor 27 and the variable displacement oil pump 9 are same, and the increase and decrease of the angular velocity ω is dependent on the balance between an output torque M₁ of the constant displacement oil motor 27 and an input torque M₂ of the variable displacement oil pump 9. The output torque M₁ and the input torque M₂ may be determined by the following expressions, M₁∝P₁×q₁, wherein P₁ is the inlet pressure of the constant displacement oil motor 27 (which is dependent on the weight of the heavy object and is substantially constant during one lowering process), and q₁ is a constant quantity, thus M₁ is also a constant quantity; M₂∝P₂×q₂, wherein P₂ is the pressure of the energy accumulator 15 (which is increased during the energy accumulating process), and q₂ is a displacement of the variable displacement oil pump 9.

When M₁> M₂, ω is increased and the lowering speed is accelerated; and when M₁< M₂, ω is decreased and the lowering speed is decelerated. A numerical value of the angular velocity ω is detected and input into the controller 31 (K₁) to be compared with a preset value of ω, then the displacement q₂ of the variable displacement oil pump 9 is adjusted so as to change M₂. In theory, without considering efficiencies of the mechanical transmission and the hydraulic system, the lowering speed of the heavy object may be rapidly and effectively controlled and potential energy of the heavy object may be mostly recovered when there is no throttle heating loss. The slowing down or middle suspending before the heavy object falling onto the ground is still operated by the driver.

(C) In a large hydraulic handling machine, generally multiple variable displacement plunger oil pumps are used (for example, the reach stacker has three load sensitive variable displacement plunger oil pumps having large flow), all or some of which may be replaced with a variable displacement plunger oil motor, and the returning oil from a telescoping oil cylinder and an amplitude oil cylinder may be led to different oil motors, and a rotate speed sensor 28 is provided on a pump shaft. Similarly, after processing collected data, such as a pressure P and a flow Q of the energy accumulator and a rotate speed ω of the pump, specialized controllers 31 (K₁) and 29 (K₂) timely adjust displacements of a variable displacement oil pump 9 and a variable displacement oil motor 27 respectively, so as to control the speed and the smoothness of lowering the heavy object during the unloading process or the lowering process of the power machine after the lifting operation is finished. An instant lowering speed of the heavy object is dependent on the flow Q (Q∝_{ω}×q₁) of the variable displacement oil motor 27, wherein ω is an angular velocity of the variable displacement oil motor 27, and q₁ is an instant displacement of the variable displacement oil motor 27, thus the lowering speed of the heavy object can be controlled by adjusting the rotate speed of the variable displacement oil motor 27 and a displacement adjusting mechanic timely and effectively. Rotate speeds of the variable displacement oil motor 27 and the variable displacement oil pump 9 are same, and the increase and decrease of the angular velocity ω is dependent on the balance between an output torque M₁ of the variable displacement oil motor 27 and an input torque M₂ of the variable displacement oil pump 9. The output torque M₁ and the input torque M₂ may be determined by the following expressions, M₁∝P₁×q₁, wherein P₁ is an inlet pressure of the variable displacement oil motor 27 (which is dependent on the weight of the heavy object and is substantially constant during one lowering process), and q₁ is a displacement of the variable displacement oil motor 27; M₂∝P₂×q₂, where P₂ is the pressure of the energy accumulator 15 (which is increased during the energy accumulating process), and q₂ is a displacement of the variable displacement oil pump 9.

When M₁>M₂, ω is increased and the lowering speed is accelerated; and when M₁<M₂, ω is decreased and the lowering speed is decelerated. A numerical value of the angular velocity ω is detected and input into the specialized controllers 31 (K₁) and 29 (K₂) to be compared with preset values of ω, then the displacement q₁ of the variable displacement oil motor 27 and the displacement q₂ of the variable displacement oil pump 9 are respectively adjusted so as to change M₁ and M₂ at the same time. In theory, without considering efficiencies of the mechanical transmission and the hydraulic system, the lowering speed of the heavy object may be rapidly and effectively controlled and potential energy of the heavy object may be mostly recovered when there is no throttle heating loss. The slowing down or middle suspending before the heavy object falling onto the ground is still operated by the driver.

In the above several systems, the regeneration process of potential energy is realized in the following way. The pressure oil within the energy accumulator 15 passes through a small two-position two-way solenoid reversing valve 10 having throttling holes, and then is released to an oil inlet of the oil pump 9, which increases a pressure at this position. A two-position four-way solenoid reversing valve is de-energized and reset to release energy in large flow so as to reduce or eliminate the hydraulic impact. The energy accumulator 15 implements a pressure oil supply to the oil pump 9, which reduces the output power of the power machine 8. The discharging oil of the oil pump 9 flows to the lifting cylinder 19 via the control valve group 20 so as to lift the heavy object.

Recovery and regeneration of kinetic energy of the vehicle before being braked is described as follows.

Another two-position three-way solenoid reversing valve 33 is added in the above hydraulic system which may realize the recovery and regeneration of potential energy. The two-position three-way solenoid reversing valve 33 has one oil inlet passage connected to the outlet of the oil pump 9 via a one-way valve 26, another oil inlet passage connected to a port D of the two-position four-way solenoid reversing valve 11, one outlet connected to a port O of the two-position five-way solenoid reversing valve 32, and another outlet connected to the outlet of the oil pump 27. Furthermore, a two-position two-way solenoid reversing valve 4 is provided in front of the pressure oil inlet P_{A} of the original mechanical controlled valve group KF. When the vehicle is braked, the two-position two-way solenoid reversing valve 4 is energized and turned off, and under the action of the inertial kinetic energy of the vehicle, a reduction gearbox 5 having a clutch drives the oil pump 9 and the oil motor 27 to rotate, so as to charge the oil into the energy accumulator 15 from the oil tank 1. The oil pump 9 and the oil pump 27 both act as a load, and a resisting torque formed by the load cooperates with a mechanical brake to slow down the vehicle until the vehicle is stopped, thus the braking force of the vehicle is increased. When the vehicle is started, the two-position four-way solenoid reversing valve 11 is de-energized, the two-position five-way solenoid reversing valve 32 is energized, and the oil pump 9 and the oil pump 27 (which are both in an oil motor working condition at this moment), driven by the pressure oil within the energy accumulator 15, cooperate with the power machine to start the vehicle via the reduction gearbox 5 having the clutch, thus the starting force of the vehicle is increased. When the vehicle is moving forward or backward, rotation directions of the power machine and the oil pumps are not changed, thus the recovery and regeneration of the kinetic energy can be performed normally. In this way, this system can achieve the recovery and regeneration of potential energy of the heavy object and kinetic energy of the vehicle on the basis of maintaining all original functions of the traveling hydraulic lifting machine.

| | Restoring | Accumulating potential energy in lowering process | Regenerating potential energy for assisting lifting process | Accumulating kinetic energy in braking process | Regenerating kinetic energy for assisting starting process |
|---|---|---|---|---|---|
| State of the clutch | (+, -) | - | - | + | + |
| 1DT | - | + | Delay - | + | Delay - |
| 5DT | - | + | - | - | + |
| 6DT | - | - | - | - | + |
| 4DT | - | - | Firstly + | - | Firstly + |
| 8DT | - | - | - | + | + |

Action and working condition table of electromagnets of the variable displacement oil pump system

Recovery and regeneration of potential energy and kinetic energy of medium-sized or small-sized traveling hydraulic handling machines, such as a forklift, is described as follows.

The hydraulic system, used in the medium-sized or the small-sized hydraulic lifting machine, is simple and generally has only one constant displacement oil pump. The technical solution for improving this hydraulic system is to replace the constant displacement oil pump with a constant displacement oil motor 9 having a same displacement, wherein an inlet of the constant displacement oil motor 9 is connected to an oil tank 1 via a one-way valve 3, one way of an outlet of the constant displacement oil motor 9 is directly connected to a returning oil filter 2 via a two-position two-way solenoid reversing valve 21, and another way of the outlet of the constant displacement oil motor 9 is connected to a port H of the two-position four-way solenoid reversing valve 11 via a one-way valve 22. The two-position four-way solenoid reversing valve 11 has a port I connected to the oil inlet of the constant displacement oil pump 9, a port Z connected to the energy accumulator 15 via a stop valve 14, and a port D connected to the pressure oil inlet P_{A} of the control valve group 20. A small two-position two-way solenoid reversing valve 10 having a throttle hole is connected in parallel between the port Z and the port I of the two-position four-way solenoid reversing valve 11. A safety valve 12 and a pressure detecting point 3 are provided on a bypass of the energy accumulator 15. The control valve group 20 is connected to the lifting cylinder 19, and when the lifting cylinder 19 is lowered, the returning oil flows to an inlet of a two-position three-way solenoid reversing valve 23 via a port T of the control valve group 20, and then via two ways of an outlet of the two-position three-way solenoid reversing valve 23, the returning oil respectively flows to the inlet of the oil pump 9 and the returning oil filter 2 via an adjustable throttle valve 34. For a forklift of 5 to 10 ton in the market, though two constant displacement pumps are provided in the hydraulic system, the above solution is also applicable since the two constant displacement pumps are coaxially and mechanically linked. Therefore in summary, the feature of the above solutions is that, during the potential energy recovering process when lowering the heavy object, the oil pump/oil motor, passed through by the pressure returning oil of the working cylinder before entering the energy accumulator, are both not in an oil motor working condition but in an unloading working condition or an oil pump working condition driven by an engine, and potential energy and kinetic energy are recovered or regenerated by same oil pump/oil motor.

It should be noted that, a two-position two-way solenoid reversing valve 25 should be added in the solution having two or more pumps when potential energy is regenerated, so as to prevent the power machine from overspeeding caused by losing load when the heavy object is too light. In the solution having one pump, the stability of the lifting speed may be maintained by controlling an opening of a lifting valve by the driver or mounting a speed regulating valve on the oil passage.

In order to prevent the oil from being polluted by ambient environment, the oil tank may employ the diaphragm plate piston sealed oil tank having a constant pressure (Chinese Patent No. 200720068995.0), so as to ensure reliability and service life of the system.

The hydraulic system of the energy-saving traveling hydraulic handling machine may be formed by various standard oil pumps/oil motors and hydraulic components such as hydraulic valves. The specifications and models of the selected hydraulic components should match with the existing hydraulic system. After finalizing the design, the above system should be combined into the overall design of the hydraulic lifting machine to manufacture a specialized integrated valve, so as to reduce volume and cost. When in an idling state (or a non-lifting working condition), the power machine (a diesel engine or an electric motor) may charge energy into the energy accumulator so as to be prepared for fully supporting the next lifting process or the next starting process. Thus the power machine can employ a model having a small power so as to obtain better technique economic performance and better performance in energy saving and emission reduction.

Beneficial effects of the above system are described as follows.

1. In the hydraulic system of the energy-saving traveling hydraulic handling machine, functions of the existing hydraulic system are utilized and developed to recover and regenerate the potential energy of the heavy object and the kinetic energy of the vehicle, and the temperature rise of the hydraulic system is also reduced.

2. In the energy-saving traveling hydraulic handling machine, recovery and regeneration of potential energy and kinetic energy is a simple physical process, and is not an electrochemical process, thus a high-speed and high-efficiency recovery and regeneration of potential energy and kinetic energy can be achieved.

3. In the energy-saving traveling hydraulic handling machine, when in an idling state (or a non-lifting working condition), the power machine (a diesel engine or an electric motor) may charge energy into the energy accumulator so as to be prepared for fully supporting the next lifting process. Thus when designing a new model, the power machine can employ a model having a small power, thereby further improving the effect of energy saving and emission reduction.

4. The technology, used in the energy-saving traveling hydraulic handling machine, is a mature hydraulic technology, and the original mechanical transmission system and operation method are not changed. Thus, no matter being newly manufactured or transformed from a used machine, the above machine have advantages of simple and practicable, better reliability, longer service life, lower cost and better economical efficiency.

5. In the energy-saving traveling hydraulic handling machine, when solenoid reversing valves in the hydraulic system thereof are all de-energized, the non energy-saving working mode of the existing mechanical hydraulic system can be restored without making any changes.

6. The hydraulic system of the energy-saving traveling hydraulic handling machine can cooperate with the existing mechanical brake, thereby improving the braking effect and prolonging the service life of the mechanical braking components.

7. The hydraulic system of the energy-saving traveling hydraulic handling machine can recover the potential energy and kinetic energy simultaneously and support various combined actions of the forklift.

8. In the energy-saving traveling hydraulic handling machine, double or multiple pumps of the hydraulic system can be combined to assist the braking or starting process, thereby increasing the braking or starting force of the vehicle and improving the working efficiency of the vehicle.

### BRIEF DESCRIPTION OF THE DRAWINGS

Figure 1 is a hydraulic schematic diagram of an energy-saving traveling hydraulic handling machine (which employs a combination of a variable displacement pump and a constant displacement motor).

Figure 2 is a hydraulic schematic diagram of an energy-saving traveling hydraulic handling machine (which employs a combination of a constant displacement pump and a constant displacement motor).

Figure 3 is a hydraulic schematic diagram of an energy-saving traveling hydraulic handling machine (which employs a combination of a variable displacement pump and a variable displacement motor).

Figure 4 is a hydraulic schematic diagram of an energy-saving traveling hydraulic handling machine (which employs a single constant displacement pump/motor).

Figure 5 is a hydraulic schematic diagram of an energy-saving general forklift.

Figure 6 is a hydraulic schematic diagram of an energy-saving reach stacker.

Figure 7 is a hydraulic schematic diagram of an energy-saving traveling hydraulic handling machine (which is another solution employing double pumps/motors).

Figure 8 is a hydraulic schematic diagram of a solution combing potential energy and kinetic energy of the energy-saving general forklift.

### DETAILED DESCRIPTION OF THE INVENTION

Embodiments of the present application will be illustrated herein in conjunction with accompanying drawings. A system, employing a combination of a variable displacement pump and a constant displacement motor, is shown in Figure 1, which is a better adaptive solution and may be employed to recover potential energy under various working conditions. After a variable displacement oil pump 9, driven by a power machine (a diesel engine or an electric motor) 8 operated by an user, drives a lifting cylinder 19 to lift a heavy object, if the machine is operated to perform a lowering operation, under the action of the gravity of the heavy object the oil in a lower cavity (a rodless cavity) of the lifting cylinder 19 is pressed into an unobstructed oil return passage T (with a flow resistance being adjusted to a minimum value) of a control valve group 20 during the lowering process of the heavy object. At the same time, 1DT and 5DT are energized, reversing valves 11 and 32 are reversed, the returning pressure oil passes through the reversing valve 32 from a port B to a port G and then flows to an inlet of a constant displacement oil motor 27, and then the oil flowing out of the constant displacement oil motor 27 passes through a one-way valve 30, flows to a returning oil filter 2 via a port O of the reversing valve 32, then flows into an oil tank 1. At this moment, a coaxially or mechanically linked variable displacement oil pump 9 is driven by a torque of the constant displacement oil motor 27, formed by a oil return pressure caused by the potential energy of the heavy object, to draw the oil out from the oil tank 1 via a one-way valve 3, then the oil passes through a one-way valve 22, and a one-way valve 11 from a port H to a port Z, and then flows into an energy accumulator 15 via a stop valve 14 being switched on (which may be switched off during maintenance). In this way, potential energy of the heavy object is converted to pressure energy of the fluid to be stored in the energy accumulator 15 during the lowering process of the heavy object, and a safety valve 12 provides pressure limiting protection.

When a new lifting operation is required, 4DT is firstly energized while the control valve group 20 is operated, the pressure oil within the energy accumulator 15 flows to a port I of a two-position four-way solenoid reversing valve 11 via a two-position two-way solenoid reversing valve 10 having throttling effect, and flows to an oil inlet of the variable displacement oil pump 9, which increases a pressure at this position. The two-position four-way solenoid reversing valve 11 is de-energized and reset to release energy in large flow so as to reduce or eliminate the hydraulic impact. After a delay, 1DT and 5DT are both de-energized, the reversing valve 11 and the reversing valve 32 are reset, and then the pressure oil within the energy accumulator 15 is led to the inlet of the variable displacement oil pump 9, thereby implementing a pressure oil supply. The variable displacement oil pump 9 and the constant displacement oil motor 27 (which at this moment is in a pump operating condition) are driven by the power machine 8, and the pressure oil, flowing out of outlets of the variable displacement oil pump 9 and the constant displacement oil motor 27, respectively passes through the one-way valve 22 and the one-way valve 30, and both flow to a pressure oil inlet P_{A} of the control valve group 20 via the solenoid reversing valve 11 and the solenoid reversing valve 32 respectively, and the pressure oil enters a lifting cylinder 19 via the control valve group 20.

There may be two situations at this time. A first situation is that, the pressure in the energy accumulator 15 is less than an outlet pressure P_{A} of the pump group. Under this situation, the two-position two-way solenoid reversing valve 25 is energized to be opened, the pressure oil within the energy accumulator 15 flows to the inlet of the variable displacement oil pump 9 after passing through the reversing valve 11 from the port Z to the port I, and then flows to the inlet of the constant displacement oil motor 27 in the pump operating condition after passing through the two-position two-way solenoid reversing valve 25, so as to implement a pressure oil supply to two pumps, which significantly reduces a pressure difference between an inlet and an outlet of the oil pump group. When the flow is constant, the power of the oil pump is directly proportional to the pressure difference between the inlet and the outlet (N∝ΔP), thus the energy consumption of the power machine is significantly reduced, and the power machine starts to fully drive the oil pump group to work when the pressure oil within the energy accumulator 15 is fully discharged. A second situation is that, the pressure in the energy accumulator 15 is larger than the outlet pressure P_{A} of the pump group. Under this situation, the two-position two-way solenoid reversing valve 25 is closed, the pressure oil within the energy accumulator 15 may only flow to the inlet of the variable displacement oil pump 9 to implement a pressure oil supply only to the variable displacement pump 9. The constant displacement oil motor 27 in the pump operating condition is fully driven by the power machine, which may prevent the power machine from overspeeding caused by losing load. When the pressure in the energy accumulator 15 is reduced to be less than the outlet pressure P_{A} of the pump group, the two-position two-way solenoid reversing valve 25 is opened, such that the pressure oil supply is implemented to the two pumps simultaneously to reduce the energy consumption of the power machine.

After processing collected data, such as a pressure P and a flow Q of the energy accumulator and a rotate speed ω of the pump, a controller 31(K₁) timely adjusts a displacement of the variable displacement oil pump, so as to control the speed and the smoothness of lowering the heavy object during the unloading process or the lowering process of the power machine after the lifting operation is finished. An instant lowering speed of the heavy object is dependent on the flow Q of the constant displacement oil motor 27 (Q∝ωq₁), wherein ω is an angular velocity of the constant displacement oil motor 27, and q₁ is a displacement of the constant displacement motor 27 and is a constant quantity, thus the lowering speed of the heavy object can be controlled by just controlling the rotate speed of the constant displacement oil motor 27. The rotate speeds of the constant displacement oil motor 27 and the variable displacement oil pump 9 are same, and the increase and decrease of the angular velocity ω is dependent on the balance between an output torque M₁ of the constant displacement oil motor 27 and an input torque M₂ of the variable displacement oil pump 9. The output torque M₁ and the input torque M₂ may be determined by the following expressions, M₁∝P₁×q₁, wherein P₁ is the inlet pressure of the constant displacement oil motor 27 (which is dependent on the weight of the heavy object and is substantially constant during one lowering process), and q₁ is a constant quantity, thus M₁ is also a constant quantity; M₂∝P₂×q₂, wherein P₂ is the pressure of the energy accumulator 15 (which is increased during the energy accumulating process), and q₂ is a displacement of the variable displacement oil pump 9.

When M₁>M₂, ω is increased and the lowering speed is accelerated; and when M₁<M₂, ω is decreased and the lowering speed is decelerated. A numerical value of the angular velocity ω is detected and input into the controller 31 (K₁) to be compared with a preset value of ω, then the displacement q₂ of the variable displacement oil pump 9 is adjusted so as to change M₂. In theory, without considering efficiencies of the mechanical transmission and the hydraulic system, the lowering speed of the heavy object may be rapidly and effectively controlled and potential energy of the heavy object may be mostly recovered when there is no throttle heating loss. The slowing down or middle suspending before the heavy object falling onto the ground is still operated by the driver.

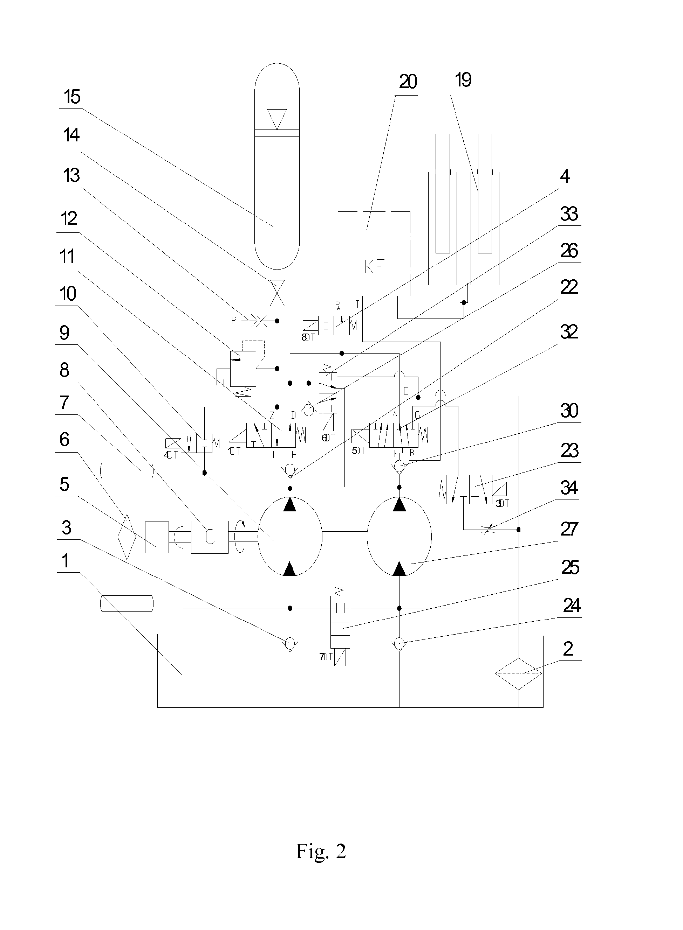

A system employing a combination of a constant displacement pump and a constant displacement oil motor is shown in Figure 2, in which the potential energy recovering and regenerating process is exactly the same as that in Figure 1. During the energy accumulating process when lowering the heavy object, with the rising of the pressure in the energy accumulator 15, the lowering speed is slowed down, and when the heavy object is relatively light and the pressure in the energy accumulator 15 is equal to the pressure in the lower cavity of the lifting cylinder 19, the heavy object may stop falling. Thus when the lowering speed of the heavy object is lower than a required value, the power machine 8 in an idling condition may continue to drive the oil pump 9 and the oil motor 27 to rotate, and the rotating oil motor 27 may continue to lower the heavy object to a required height and charge energy to the energy accumulator 15 at the same time. When the energy accumulator is filled, a two-position three-way solenoid reversing valve 23 is reversed, and the returning oil passes through an adjustable throttle valve 34, which may control the lowering speed, and flows back to the oil tank 1 via the returning oil filter 2, at the same time a two-position three-way solenoid reversing valve 33 is energized and reversed, and the oil pump 9 and the oil motor 27 are both in the unloading state.

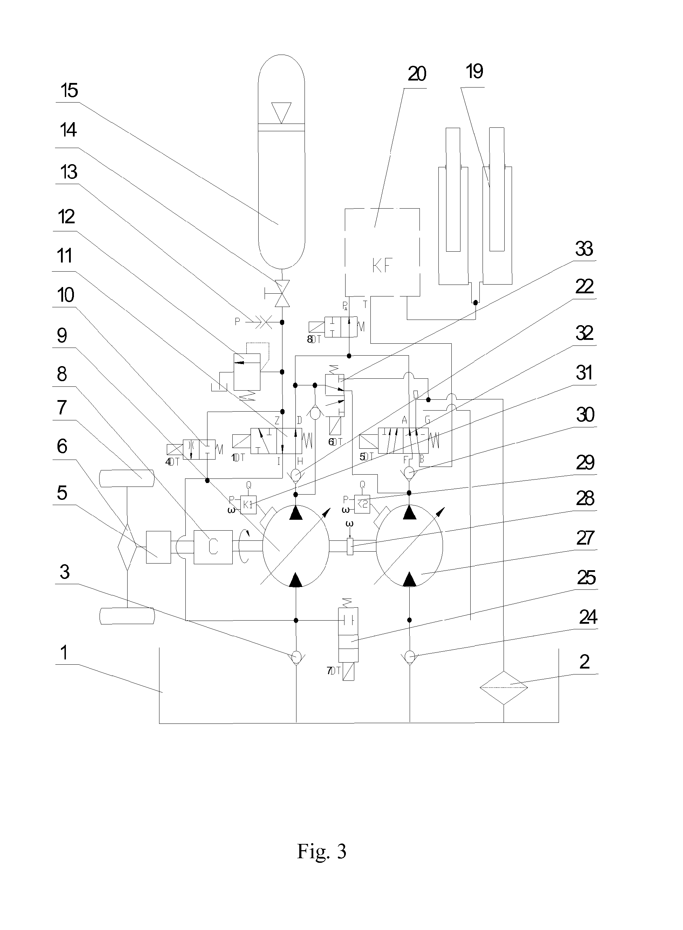

A system employing a combination of a variable displacement pump and a variable displacement oil motor is shown in Figure 3, in which the potential energy recovering and regenerating process is exactly the same as that in Figure 1. A rotate speed sensor 28 may be provided on a pump shaft. After processing collected data, such as a pressure P and a flow Q of the energy accumulator and a rotate speed ω of the pump, a controller 31 (K₁) and a controller 29 (K₂) timely adjust displacements of a variable displacement oil pump 9 and a variable displacement oil motor 27 respectively, so as to control the speed and the smoothness of lowering the heavy object during the unloading process or the lowering process of the power machine after the lifting operation is finished. An instant lowering speed of the heavy object is dependent on the flow Q (Q∝ω×q₁) of the variable displacement oil motor 27, wherein ω is the angular velocity of the variable displacement oil motor 27, and q₁ is an instant displacement of the variable displacement oil motor 27, thus the lowering speed of the heavy object can be controlled by adjusting the rotate speed of the variable displacement oil motor 27 and a displacement adjusting mechanic timely and effectively. Rotate speeds of the variable displacement oil motor 27 and the variable displacement oil pump 9 are same, and the increase and decrease of the angular velocity ω is dependent on the balance between an output torque M₁ of the variable displacement oil motor 27 and an input torque M₂ of the variable displacement oil pump 9. The output torque M₁ and the input torque M₂ may be determined by the following expressions, M₁∝P_{A}×q₁, wherein P_{A} is an inlet pressure of the variable displacement oil motor 27 (which is dependent on the weight of the heavy object and is substantially constant during one lowering process), and q₁ is a displacement of the variable displacement oil motor 27; M₂∝P×q₂, where P is the pressure of the energy accumulator 15 (which is increased during the energy accumulating process), and q₂ is a displacement of the variable displacement oil pump 9.

When M₁>M₂, ω is increased and the lowering speed is accelerated; and when M₁<M₂, ω is decreased and the lowering speed is decelerated. A numerical value of the angular velocity ω is detected and input into the controller 31 (K₁) and the controller 29 (K₂) to be compared with preset values of ω, then the displacement q₁ of the variable displacement oil motor 27 and the displacement q₂ of the variable displacement oil pump 9 are respectively adjusted so as to change M₁ and M₂ at the same time. In theory, without considering efficiencies of the mechanical transmission and the hydraulic system, the lowering speed of the heavy object may be rapidly and effectively controlled and potential energy of the heavy object may be mostly recovered when there is no throttle heating loss. The slowing down or middle suspending before the heavy object falling onto the ground is still operated by the driver.

The recovery and regeneration of kinetic energy of the vehicle may be realized by adding another two-position three-way solenoid reversing valve 33 in the above hydraulic system which may realize the recovery and regeneration of potential energy. The two-position three-way solenoid reversing valve 33 has one oil inlet passage connected to the outlet of the oil pump 9 via a one-way valve 26, another oil inlet passage connected to a port D of the two-position four-way solenoid reversing valve 11, one outlet connected to a port O of the two-position five-way solenoid reversing valve 32, and another outlet connected to the outlet of the oil pump 27. Furthermore, a two-position two-way solenoid reversing valve 4 is provided in front of the pressure oil inlet P_{A} of the original mechanical controlled valve group KF. When the vehicle is braked, the two-position two-way solenoid reversing valve 4 is energized and turned off, and under the action of the inertial kinetic energy of the vehicle, a reduction gearbox 5 having a clutch drives the oil pump 9 and the oil motor 27 to rotate, so as to charge the oil into the energy accumulator 15 from the oil tank 1. The oil pump 9 and the oil pump 27 both act as a load, and a resisting torque formed by the load cooperates with a mechanical brake to slow down the vehicle until the vehicle is stopped, thus the braking force of the vehicle is increased. When the vehicle is started, the two-position four-way solenoid reversing valve 11 is de-energized, the two-position five-way solenoid reversing valve 32 is energized, and the oil pump 9 and the oil pump 27 (which are both in an oil motor working condition at this moment), driven by the pressure oil within the energy accumulator 15, cooperate with the power machine to start the vehicle via the reduction gearbox 5 having the clutch, thus the starting force of the vehicle is increased. When the vehicle is moving forward or backward, rotation directions of the power machine and the oil pumps are not changed, thus the recovery and regeneration of the kinetic energy can be performed normally. In this way, this system can achieve the recovery and regeneration of potential energy of the heavy object and kinetic energy of the vehicle on the basis of maintaining all original functions of the traveling hydraulic lifting machine.

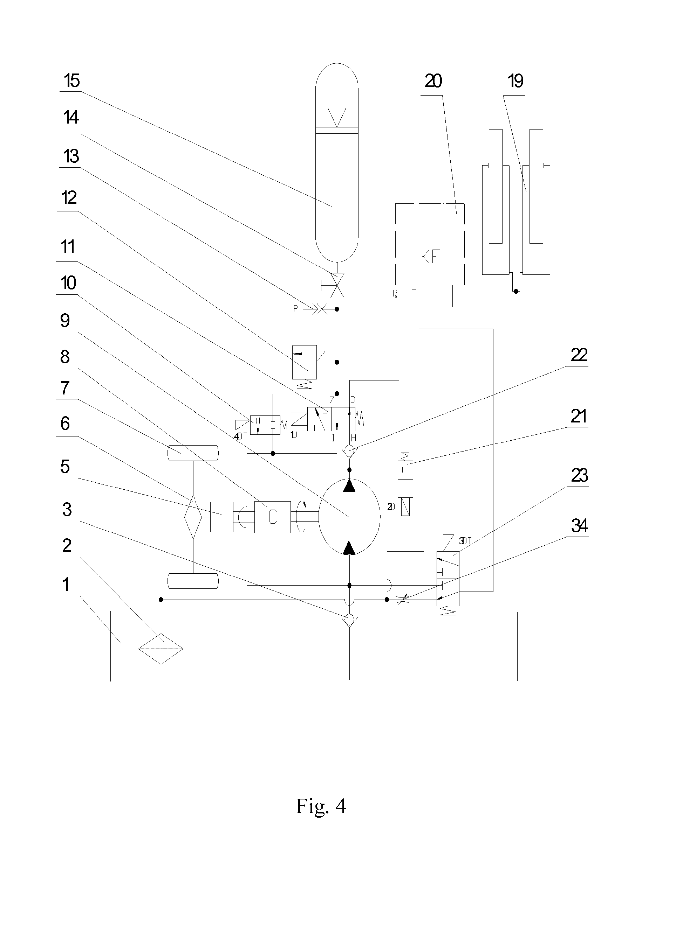

Figure 4 is a schematic diagram of a hydraulic system of an energy-saving traveling hydraulic handling machine which employs a single constant displacement pump/motor. The above hydraulic system is a simple type hydraulic system and is generally used in a medium-sized or a small-sized hydraulic lifting machine. This hydraulic system is simple and generally has only one constant displacement oil pump. The technical solution for improving this hydraulic system is to replace the constant displacement oil pump with a constant displacement oil motor 9 with a same displacement, wherein an inlet of the oil motor 9 is connected to an oil tank 1 via a one-way valve 3, one way of an outlet of the oil motor 9 is directly connected to a returning oil filter 2 via a two-position two-way solenoid reversing valve 21, and another way of the outlet of the oil motor 9 is connected to a port H of a two-position four-way solenoid reversing valve 11 via a one-way valve 22. The two-position four-way solenoid reversing valve 11 has a port I connected to the oil inlet of the oil pump 9 via a one-way valve 4, a port Z connected to an energy accumulator 15 via a stop valve 14, and a port D connected to a pressure oil inlet P_{A} of a control valve group 20. A small two-position two-way solenoid reversing valve 10 having a throttle hole is connected in parallel between the port Z and the port I of the two-position four-way solenoid reversing valve 11. A safety valve 12 and a pressure detecting point 3 are provided on a bypass of the energy accumulator 15. The control valve group 20 is connected to a lifting cylinder 19, and when the lifting cylinder 19 is lowered, the returning oil flows to an inlet of a two-position three-way solenoid reversing valve 23 via a port T of the control valve group 20, and then via two ways of an outlet of the two-position three-way solenoid reversing valve 23, the returning oil respectively flows to the inlet of the oil pump 9 and the returning oil filter 2 via an adjustable throttle valve 34.

It should be noted that, during the lowering process of the heavy object, if the energy accumulator is already filled, 1DT (the valve 11) and 2DT (the valve 21) are energized. At this time, the diesel engine is in an idling condition, the oil pump 9 is unloaded, and the discharging oil from the oil pump 9 flows back to the oil tank via the two-position two-way solenoid reversing valve 21; the returning oil from the lifting cylinder passes through the valve 23 and the throttle valve 34 and then flows back to the oil tank 1 via the returning oil filter 2, so as to continue controlling the lowering speed of the heavy object.

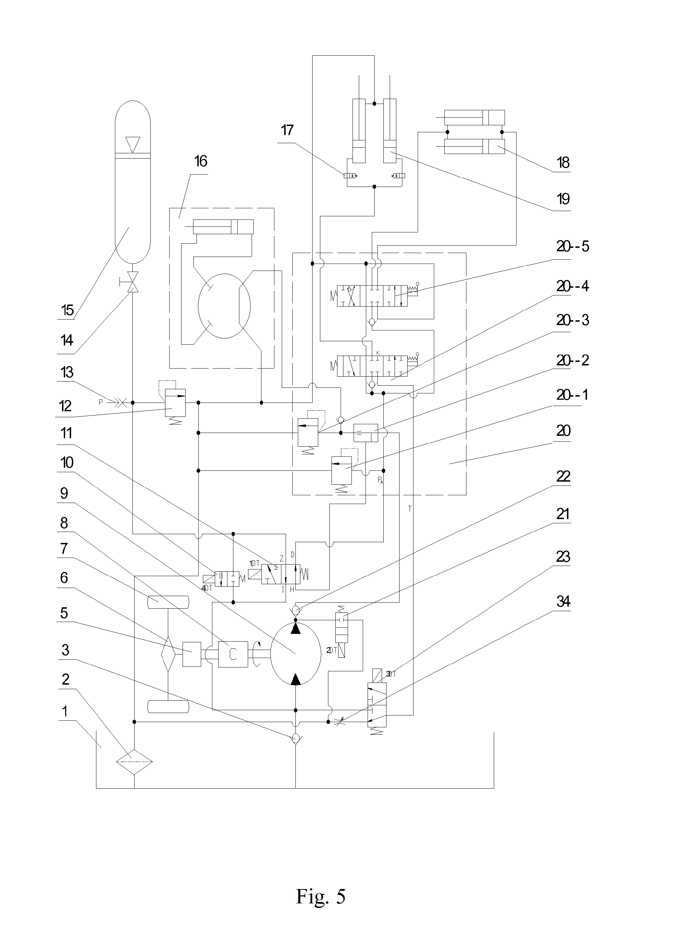

Figure 5 is a hydraulic schematic diagram of a general forklift being transformed. A servo steering system of the existing forklift is shown in a dashed frame indicated by reference numeral 16, and a control valve group of the existing forklift is shown in a dashed frame indicated by reference numeral 20, wherein reference numeral 20-2 indicates a flow divider valve, which distributes the flow of the oil pump 9 proportionally to a lifting oil cylinder, a tilt oil cylinder and a steering mechanism; reference numeral 20-1 indicates a pressure regulating valve for a lifting oil passage and a tilt oil passage; reference numeral 20-3 indicates a pressure regulating valve for a steering oil passage; reference numeral 20-4 indicates an operating valve for the lifting oil cylinder; and reference numeral 20-5 indicates an operating valve for the tilt oil cylinder. After being divided by the flow divider valve 20-2 of the control valve group 20, the discharging oil from the oil pump 9 flows to a port H of a two-position four-way solenoid reversing valve 11, and then flows to operating valves in the control valve group 20 via the two-position four-way solenoid reversing valve 11. Reference numeral 17 indicates a cut-off valve for preventing the heavy object from falling down rapidly. The working principle of this forklift is identical with that of the system shown in Figure 3.

| | Restoring | Accumulating potential energy in lowering process | Accumulating potential energy in lowering process (when the energy accumulator is filled) | Regenerating potential energy for assisting lifting process | Accumulating kinetic energy in braking process | Regenerating kinetic energy for assisting starting process |
|---|---|---|---|---|---|---|
| State of the clutch | (+, -) | - | - | - | + | + |
| 1DT | - | + | + | Delay - | + | Delay - |
| 2DT | - | - | + | - | - | + |
| 3DT | - | + | - | - | - | - |
| 4DT | - | - | - | Firstly + | - | Firstly + |

Action and working condition table of electromagnets of the forklift in Figure 5.

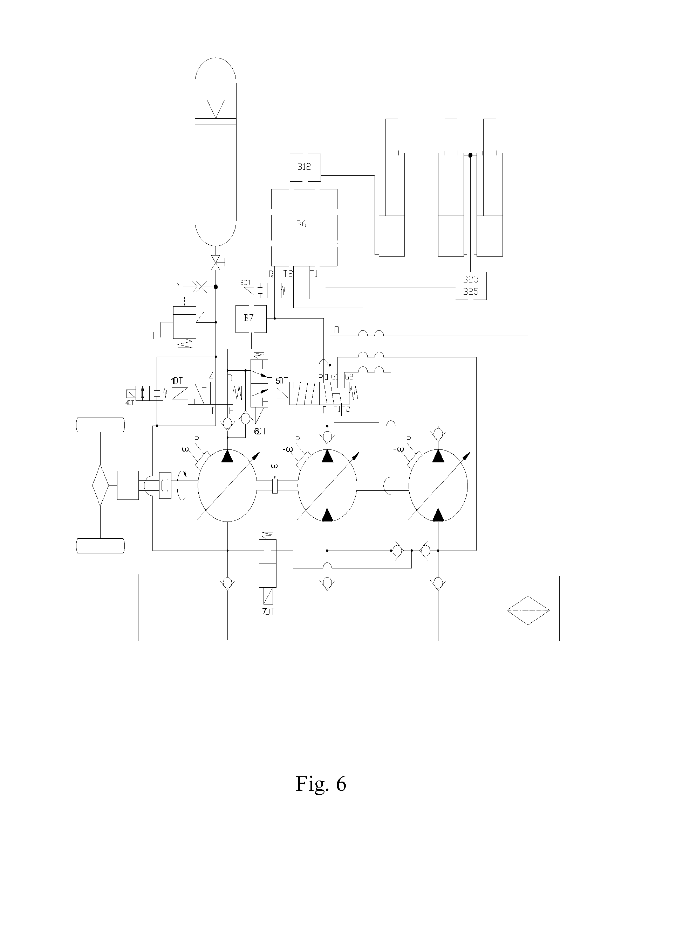

Figure 6 is a hydraulic schematic diagram of an energy-saving reach stacker. Hydraulic control valve groups of an existing reach stacker are shown in dashed frames indicated by reference numerals B6, B7, B12, B23 and B25. When recovering the potential energy, the oil in lower cavities of a telescoping cylinder and an amplitude cylinder, which have different pressures, flows to inlets of two variable displacement oil motors to form a resultant torque. Then an oil pump is driven by the resultant torque to charge energy into the energy accumulator. The working principle of this reach stacker is identical with that of the system in Figure 3.

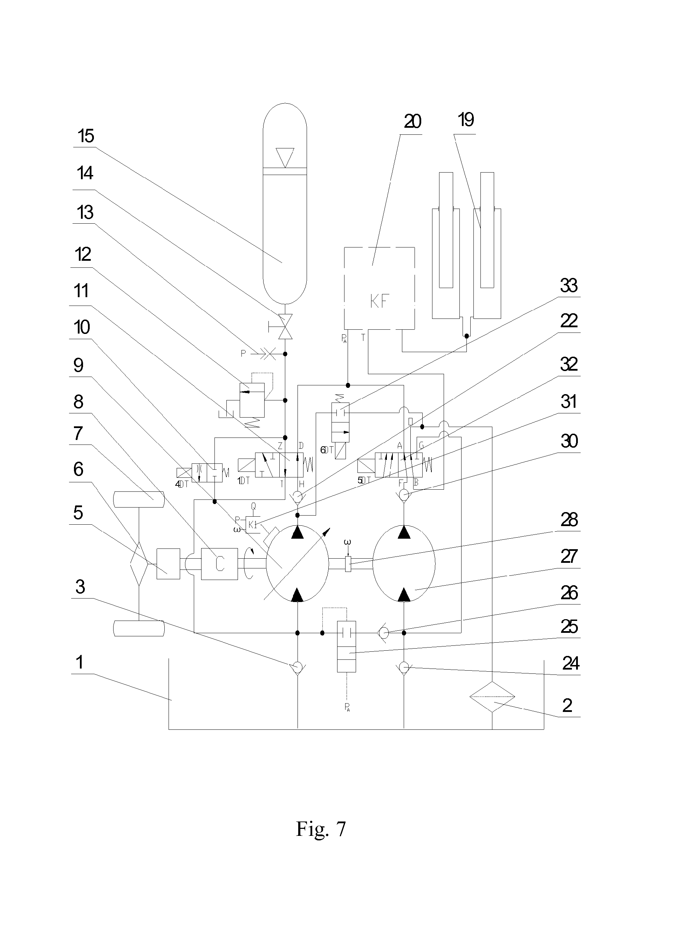

Figure 7 is another solution employing double pumps/motors. Particularly, the one-way valve 26 and the two-position two-way solenoid reversing valve 4 are omitted, the two-position three-way solenoid reversing valve 33 is replaced by a two-position two-way solenoid reversing valve, and the two-position two-way solenoid reversing valve 25 is replaced by a hydraulic control reversing valve. Through this system is simpler than solutions in Figures 1, 2 and 3, it is difficult for the two pumps to simultaneously perform braking function or starting function.

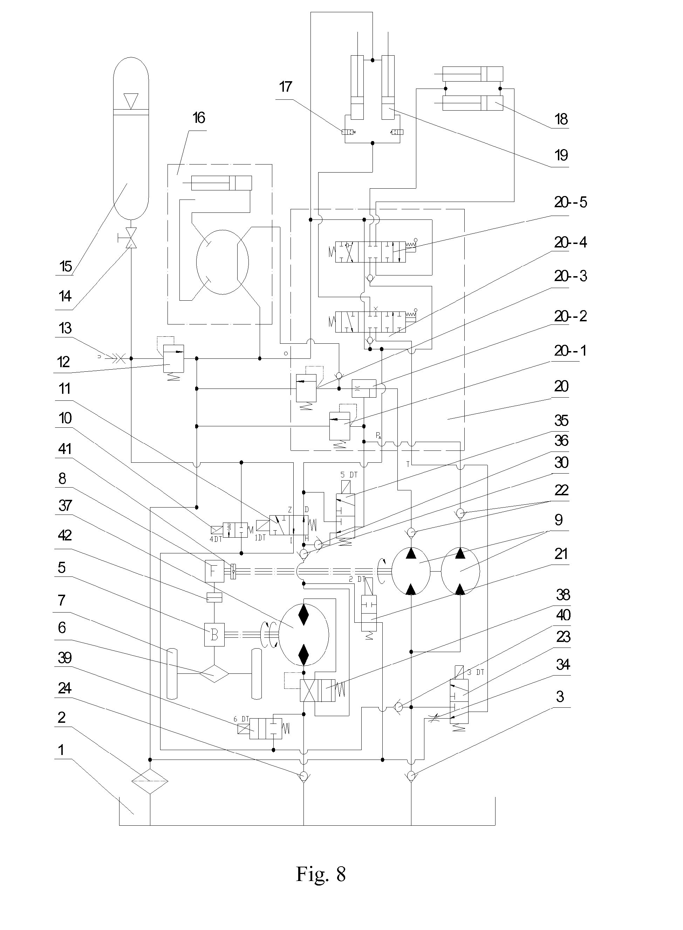

Figure 8 is a solution combing potential energy and kinetic energy of the energy-saving general forklift. Particularly, a duplex pump 9 with a constant displacement is connected to an output shaft of a diesel engine 8 via a one-way overrunning clutch 41, a constant displacement pump 37 is mounted on an output shaft of a gearbox 5, such that the recovery and regeneration of potential energy and kinetic energy can be accomplished by different oil pumps or oil motors. When kinetic energy is recovered during braking process, a clutch 42 of the diesel engine may be disconnected, and due to the overrunning clutch 41, the lowering speed when accumulating potential energy in lowering process is independent of the rotate speed of the diesel engine in an idling condition. In order to adapt to the regular reversing operation of the forklift, a hydraulic driven two-position four-way reversing valve 38 with a larger flow diameter is mounted on the oil inlet and outlet of the oil pump 37, which may remain a constant flow direction of the output of the oil pump 37 when the forklift is moving forward or backward. A kinetic energy regeneration operation is implemented when a two-position two-way solenoid reversing valve 39 is switched on, and a potential energy regeneration operation may be implemented when the two-position two-way solenoid reversing valve 39 is switched off. In this system, when the clutch 42 is engaged, two sets of pumps (9 and 37) are combined to recovery or regenerate kinetic energy, thereby increasing the braking torque or starting torque of the vehicle and improving work efficiency of the handling machine. The working principle of other parts in the system is identical with that of the system in Figure 5.

The present application may not only be used in a traveling hydraulic handling machine, the potential energy recovery and regeneration principle thereof may also be used in a stationary hydraulic lifting machine. The above-described embodiments are merely several examples, thus the protection scope of the present application is not limited to the above description.

## Claims

1. An energy-saving traveling hydraulic handling machine, comprising a driving system and a control system for hoisting and traveling, and a new hydraulic system being formed by adding several hydraulic components in an existing hydraulic system, further comprising at least one oil pump/oil motor and at least one hydraulic energy accumulator, wherein a reversing valve, for controlling a discharging oil to flow to the energy accumulator or a working cylinder, is provided on each oil outlet passage of the at least one oil pump/oil motor; a reversing valve, for controlling a returning oil from the working cylinder to flow to an inlet of the oil pump/oil motor or flow to an oil tank, is provided on each oil inlet passage of the at least one oil pump/oil motor; and the new hydraulic system may realize a part of or all of functions of recovering and regenerating potential energy of a heavy object and recovering and regenerating kinetic energy of a vehicle on the basis of remaining all original functions and operation manners of the machine.

2. The energy-saving traveling hydraulic handling machine according to claim 1, wherein the oil pump/oil motor in the hydraulic system may be a combination of a variable displacement oil pump/oil motor and a constant displacement oil pump/oil motor, a combination of a constant displacement oil pump/oil motor, or a combination of a variable displacement oil pump/oil motor.

3. The energy-saving traveling hydraulic handling machine according to claim 1 or 2, wherein the working condition of the oil pump/the oil motor of the hydraulic system may be an oil pump working condition, an oil motor working condition, or an unloading working condition.

4. The energy-saving traveling hydraulic handling machine according to any one of claims 1 to 3, wherein during a potential energy recovering process when lowering the heavy object, a part of the oil pump/oil motor enters the oil motor working condition and is driven by the returning pressure oil of the working cylinder to output a torque; another part of the oil pump/oil motor enters into the oil pump working condition and is driven by the torque outputted by the former to press the oil from the oil tank into the energy accumulator.

5. The energy-saving traveling hydraulic handling machine according to any one of claims 1 to 3, wherein during the potential energy recovering process when lowering the heavy object, the oil pump/oil motor, passed through by the pressure returning oil of the working cylinder before entering the energy accumulator, are both not in an oil motor working condition but in the unloading working condition or the oil pump working condition driven by an engine.

6. The energy-saving traveling hydraulic handling machine according to any one of claims 1 to 5, wherein potential energy and kinetic energy are respectively recovered or regenerated by different oil pumps/oil motors, and the different oil pumps/oil motors may be combined to function.

7. The energy-saving traveling hydraulic handling machine according to any one of claims 1 to 5, wherein potential energy and kinetic energy are recovered or regenerated by same oil pump/oil motor.

8. The energy-saving traveling hydraulic handling machine according to any one of claims 1 to 7, wherein a control valve, for preventing a diesel engine from overspeeding caused by losing load, is provided in the hydraulic system.

9. The energy-saving traveling hydraulic handling machine according to any one of claims 1 to 7, wherein an adjustable throttle valve for controlling a lowering speed of the heavy object is provided in the hydraulic system employing a combination of two or more constant displacement oil pumps/oil motors and the hydraulic system employing a single oil pump/oil motor.

10. The energy-saving traveling hydraulic handling machine according to claim 3, wherein a specialized controller is provided in combinations having a variable displacement oil pump and a variable displacement oil motor.

11. The energy-saving traveling hydraulic handling machine according to any one of claims 1 to 7, wherein a two-position two-way solenoid reversing valve having a throttle hole is provided in the hydraulic system for performing a buffer function during an energy regeneration process.

12. The energy-saving traveling hydraulic handling machine according to any one of claims 1 to 11, wherein the hydraulic system may be formed by various standard oil pumps/oil motors and hydraulic components such as hydraulic valves, or formed by designing and manufacturing a specialized integrated valve.
